# EUROPEAN PATENT APPLICATION

(11) **EP 2 717 205 A1**
(43) Date of publication of application: **09.04.2014**
(21) Application number: 12788769.3
(22) Date of filing: 24.05.2012
(51) Int. Cl.: G06Q 20/00

(54) **SECURE, CLOSED-LOOP PAYMENT SYSTEM AND METHOD**

(30) Priority: 24.05.2011 CN 201110135767
(71) Applicant: China Unionpay Co., Ltd, Shanghai 200135 (CN)
(72) Inventor: HOU, Weidong, Shanghai 200135 (CN); CHAI, Hongfeng, Shanghai 200135 (CN); LI, Haining, Shanghai 200135 (CN); ZHUANG, Xiao, Shanghai 200135 (CN); LU, Zhijun, Shanghai 200135 (CN); LIU, Lei, Shanghai 200135 (CN); HE, Shuo, Shanghai 200135 (CN); LI, Qing, Shanghai 200135 (CN)
(74) Representative: Seemann & Partner
(86) International application number: PCT/CN2012/076010
(87) International publication number: WO 2012/159578

(57) **Abstract**

The invention relates to a safety closed-loop payment system and method. The safety closed-loop payment system of the invention comprises a user terminal (100), a bank card issuer backstage (101),a payment terminal (102) and a network access authority system (103). The user terminal (100), the bank card issuer backstage (101),the payment terminal (102) and the network access authority system (103) constitutes a closed-loop structure. With the safety closed-loop payment system and method of the invention, safety and flexibility in payment can be improved.

## Description

### Related application

This application is a translation of the international application PCT/CN2012/076010 filed on May 24, 2012, which in turn claims priority from the Chinese application with the official file number 201110135767.1, filed on May 24, 2011. The entire contents of both applications are incorporated herein by reference.

### FIELD OF THE INVENTION

The present invention relates to a payment system and method, in particular, to a safety closed-loop payment system and method.

### BACKGROUND

With the development of bank network service system, various bank cards such as debit and credit cards are more and more prevailing in consumer's daily consumptions. When traveling, consumers do not have to bring along with large amount of cash but bank cards for payments at a point of sales terminal connected to banks. This greatly facilitates the settlements for consumption.

However, there still exists certain risk when consumers use bank cards to make the payment at a POS terminal (Point of sale terminal). For example, the account number and the password of consumer's bank cards could be stolen when in payment. On the other hand, when a consumer makes the payment by a bank card, he or she has to bring with him or her the bank card. Because a bank card is generally used merely by a card holder, the consumption could not be flexible.

In addition, with the rapid development of electronic and communication technology, it is also possible to use cell phones to make payments. Currently, there have been developed various ways of cell phone payments, e.g., cell phone's online payments through an entirely transplantation of existing online banking technology. However, this method has specific demands to cell phones, i.e., it must be a smart cell phone of a higher version. Therefore, the promotion of cell phone payment is also hindered.

### SUMMARY OF THE INVENTION

In view of the above, the present invention aims to provide a payment system and a payment method that can realize the safe payment without carrying the bank card.

The safety closed-loop payment system according to the present invention is characterized in comprising:
a user terminal by means of which a user sends out appointment information;
a bank card issuer backstage which accepts the appointment information from the user terminal, generates a mapping relationship of the appointment information and returns it to the user, wherein the mapping relationship of the appointment information at least contains a correspondence between an appointment code and a bank card;
a payment terminal which obtains payment information from the user and sends the payment information to a network access structure described below, wherein the payment information at least contains the appointment code and consumption information; and
the network access authority system which sends the payment information sent from the payment terminal to the bank card issuer backstage,
wherein the bank card issuer backstage verifies the payment information sent from the network access authority system according to the mapping relationship of the appointment information, and the bank card issuer backstage is configured to inform the user of completion of transaction in case of successful verification.

On the basis of the above configuration, since the user terminal, the bank card issuer backstage, the payment terminal and the network access authority system constitute a closed-loop structure, each component unit is closely tied to another one, thus enhancing the safety in payment. The user himself or other users who know the appointment code can input the appointment code at the payment terminal to make consumption transaction. Therefore, users can complete consumptions without bringing along with him any financial media such as bank cards, thus his consumption activities are made flexible. Moreover, during the consumption, no sensible information such as magnetic track will appear, thus the safety of transaction can be improved. Besides, the card holder himself can be informed of the information on consumption in real time, thus the safety of payment transaction can be further improved.

Preferably, the appointment information contains bank card number and cell phone number, and the mapping relationship of the appointment information contains a correspondence of the appointment code with the bank card number and the cell phone number.

Due to the one-to-one correspondence of the appointment code with the bank card number and the cell phone number, only the appointment code is needed during the consumption and no bank card is required, and thus consumption is more flexible and safe.

Preferably, the payment information further comprises transaction verification code, and the transaction verification code includes cell phone number and bank card password.

In this way, when in consumption, safety in consumption can be improved because of using the appointment code through further inputting of the bank card password. This is because during the consumption, both information on the appointment code and information on the bank card password are required to be verified. Therefore even if other people illegally get the appointment code, consumption is also disabled, and thus safety can be greatly improved.

Preferably, the appointment code is generated at the bank card issuer backstage.

Preferably, the appointment code is input by the user and stored at the bank card issuer backstage.

Preferably, the appointment information contains the bank card number, the cell phone number and appointed consumption credit, and the mapping relationship of the appointment information contains a correspondence relationship of the appointment code with the bank card number, the cell phone number and the appointed consumption credit.

In this way, by further setting the consumption credit, a consumption corresponding to the appointed consumption credit set by the bank card holder himself can be prevented from being exceeded, thus further improving safety and reasonableness in payment.

Preferably, the consumption information contains consumption amount incurred at each time.

Preferably, the appointment code is valid within prescribed time period.

By setting the time period within which the appointment code is valid, the safety in payment can be further improved.

Preferably, the payment terminal is any one of POS terminal, network payment terminal, landline telephone, and mobile phone.

Preferably, in the event that the payment terminal is a POS terminal, the POS terminal can be input with the appointment code. Preferably, the user inputs the appointment information of the user to the bank card issuer backstage using cell phone or network.

The safety closed-loop payment method according to the present invention is characterized in comprising:
an appointment step which accepts appointment information from a user, generates a mapping relationship of the appointment information and returns the relationship to the user, wherein the mapping relationship of the appointment information at least contains a correspondence between an appointment code and a bank card;
a payment step which obtains payment information from the user, wherein the payment information at least contains the appointment code and the consumption information; and
a verification step which verifies the payment information according to the appointment information so as to confirm the validity of the transaction,
wherein in the verification step, the user is informed of the completion of the transaction in case of successful verification.

With the appointment step, the payment step and the verification step, users can complete their consumption without any financial media such as bank card, and thus the flexibility of consumption is improved. Moreover, during the consumption, no sensible information such as magnetic track will occur, and therefore the safety of transaction will be further improved.

Preferably, an open-up step is further included before the appointment step, in which the user submits a binding relationship between the cell phone number and the bank card number to the bank card issuer.

Preferably, the appointment information contains the bank card number and the cell phone number, and the mapping relationship of the appointment information contains a correspondence relationship of the appointment code with the bank card number and the cell phone number.

Preferably, the payment information further contains a transaction verification code, which includes the cell phone number and the bank card password.

Preferably, the appointment code is generated by a bank card issuer backstage.

Preferably, the appointment code is input by the user and stored at the bank card issuer backstage.

Preferably, the appointment information contains the bank card number, the cell phone number and appointed consumption credit.

The mapping relationship of the appointment information contains a correspondence relationship of the appointment code with the bank card number, the cell phone number and the appointed consumption credit.

In this way, by further setting the appointed consumption credit, consumption corresponding to the appointed consumption credit set by the bank card holder himself can be prevented from being exceeded, thus further improving the safety and reasonableness in payment.

Preferably, the consumption information contains consumption amount.

Preferably, the appointment code is valid within a prescribed time period.

By setting the time period within which the appointment code is valid, the safety in payment can be further improved.

As described above, the system and the method for safety closed-loop payment according to the present invention can support card free payment transactions of various bank cards such as debit card, credit card, etc. In addition, because payment transactions can be completed by payment means such as POS terminals, card free consumption becomes to be more populated. Moreover, due to the appointment code, the transactions are made safer, and no sensible information such as magnetic track of bank card will appear in the process of consumption, and thus leakage of information related to the bank cards in the transaction can be avoided. Furthermore, due to the appointment code, the transactions are made more flexible and convenient. Therefore, users can directly place the payment for their consumption without any attendance of the payment media such as bank card.

### BRIEF DESCRIPTION OF THE DRAWINGS

Fig. 1 is a structural block view for illustrating the safety closed-loop payment system of the invention.
Figs. 2(a)-2(c) are schematic views representing the mapping relationship of the appointment information of the invention.
Fig. 3 is a schematic view representing the main steps of the safety closed-loop payment method of the invention.

### DETAILED DESCRIPTION OF THE INVENTION

Some of many possible embodiments of the invention will be described hereinafter in order to provide a basic understanding of the invention. It is not intended to identify critical or crucial elements of the invention or define the scope of protection.

In order to make the objectives, technical solutions and advantages of the invention clearer, the invention will be further described in detail with reference to accompanying drawings hereinafter.

### The first embodiment

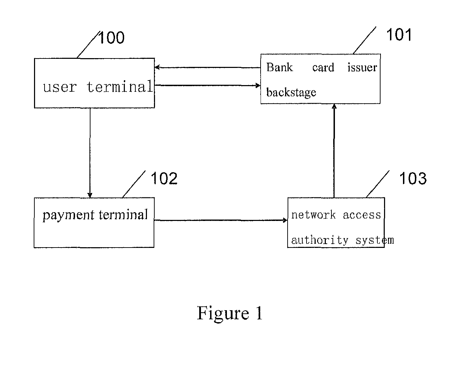

Fig. 1 is a structural block view for illustrating the safety closed-loop payment system of the invention.

As shown in Fig. 1, the safety closed-loop payment system of the invention comprises a user terminal 100, a bank card issuer backstage 101, a payment terminal 102 and a network access authority system 103.

The bank card issuer backstage 101 accepts the appointment information from the user terminal 100, generates a mapping relationship of the appointment information and returns it to the user terminal 100. When placing the consumption payment, user inputs payment information via the payment terminal 102 which sends the payment information to the network access authority system 103. The network access authority system 103 sends the payment information sent from the payment terminal 102 to the bank card issuer backstage 101 which verifies the payment information sent from the network access authority system 103 according to the mapping relationship of the appointment information. The bank card issuer backstage 101 informs the user terminal 100 of completion of the consumption transaction in case of successful verification.

Therefore, the user terminal 100, the bank card issuer backstage 101, the payment terminal 102 and the network access authority system 103 constitutes a ring-like closed payment path, wherein each component unit is closely tied to another one, and thus the safety in payment is improved.

The safety closely-loop payment system having the above-described configuration will be discussed specifically hereinafter.

Firstly, user originates a transaction appointment application with the bank card issuer backstage 101 via the user terminal 100 (for example, a cell phone, network, etc.). In this stage, the bank card issuer backstage 101 collects appointment information from the user terminal 100, such as appointment information on bank card number, cell phone number, and appointed consumption credit, etc. The bank card issuer 101, after acquiring the appointment information from the user terminal 100, generates an appointment code and a mapping relationship of the appointment information, returns the appointment code to the user terminal 100 via a corresponding channel, and in the meantime, informs the user terminal 100 of successful appointment.

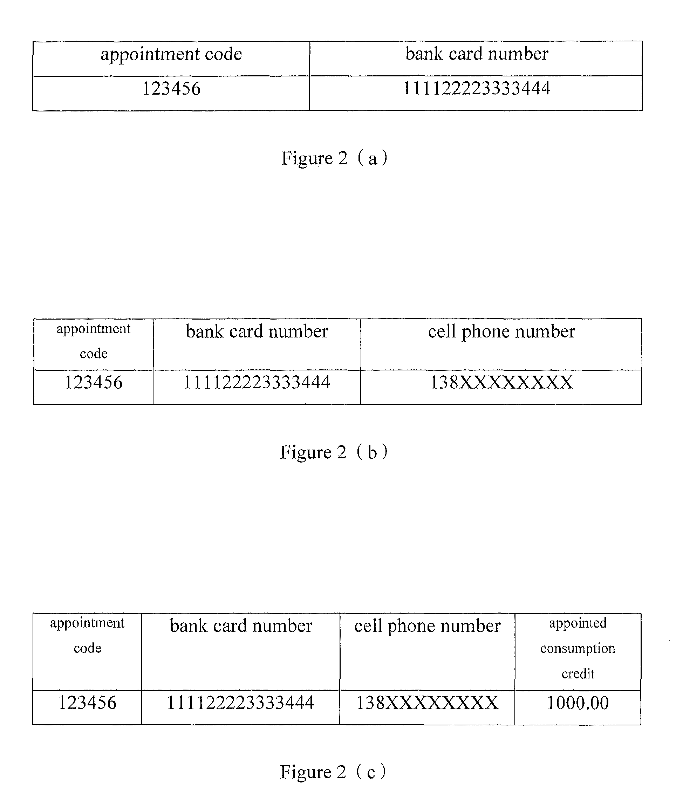

Figs. 2(a)-2(c) are the schematic views illustrating the mapping relationship of the appointment information of the invention.

As shown in Fig. 2(a), the mapping relationship of the appointment information at least contains a one-to-one correspondence between the appointment code and the bank card number. That is, the appointment code "123456" shown in Fig. 2(a) uniquely corresponds to bank card number "111122223333444".

Further, on the basis of Fig. 2(a) and as shown in Fig. 2(b), the mapping relationship of the appointment information may also contain a one-to-one correspondence of the appointment code with the bank card number and the cell phone number. That is, one appointment code corresponds to one bank card number and one cell phone number.

Further, on the basis of Fig. 2(b) and as shown in Fig. 2(c), the mapping relationship of the appointment information may also contain a one-to-one correspondence of the appointment code with the bank card number, the cell phone number and the appointed consumption credit. That is, one appointment code corresponds to one bank card number, one cell phone number and one appointed consumption credit.

In addition, the appointment code shown here is a 6-digit number which is exemplary merely for illustrating the invention. The appointment code of the invention can be a number of any digits, symbols and their combination. It is not necessary to limit the appointment code of the invention in any way.

Moreover, in this embodiment, the appointment code is generated at the bank card issuer backstage 101.

Further, in order to further ensure the safety of transaction, the appointment code can be set valid only within a prescribed time period. Here the prescribed time period can be set at any time period such as 12 hours, 24 hours, 36 hours, and 72 hours, etc. That is, the prescribed time period can be set randomly defined as required.

Next, after the user acquires the appointment code from the bank card issuer backstage 101 via the user terminal 100 and when it is required to place a consumption payment, the user enters the appointment code and a transaction verification code to place the payment at payment terminal 102. The transaction verification code at least contains one of the cell phone number and the bank card password. The payment terminal 102 packs information on the appointment code, the transaction verification code and consumption amount together and sends the information to the network access authority system 103.

The network access authority system 103 forwards the packed information sent from the payment terminal 102 to the bank card issuer backstage 101.

The bank card issuer backstage 101 verifies the sent appointment code and transaction verification code according a mapping relationship of the appointment information previously generated at the backstage so as to identify its validity. In case of successful verification, the payment transaction is completed. Meanwhile, the user can be informed of the successful transaction by such means as cell phone message.

In this embodiment, the payment terminal 102 is a POS terminal (Point of sale terminal). The POS terminal is configured to be able to enter the appointment code, in addition to the bank card number and the password, etc.

In this way, according to the safety closed-loop payment system of the invention, the user firstly makes an appointment. Then, the user himself or other users who know the appointment code can enter the appointment code and the transaction verification code on the POS terminal of the payment terminal 102 so as to conduct the consumption transaction. Therefore, users can complete the consumption without the attendance of any financial media such as bank card, thus flexibility of consumption is improved. Moreover, during the consumption, no sensible information such as magnetic track will appear, and thus the safety is further enhanced.

The safety closed-loop payment method of the invention will be discussed hereinafter.

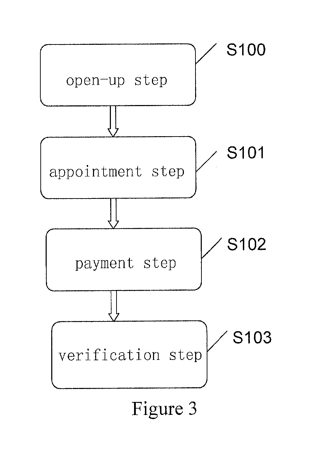

Fig. 3 is a schematic view representing the main steps of the safety closed-loop payment method of the invention.

Firstly, in an open-up step S100, the user terminal 100 submits a binding relationship between the cell phone number and the bank card number to the bank card issuer backstage 101 via such means as cell phone or network, etc.

Next, in an appointment step S101, the user terminal 100 originates an appointment application to the bank card issuer backstage 101 which accepts the appointment information from user, generates a mapping relationship of the appointment information and returns it to the user terminal 100. Herein, as shown in Figs. 2(a) to 2(c), the mapping relationship of the appointment information at least contains a correspondence between the appointment code and the bank card. Preferably, the mapping relationship of the appointment information contains a correspondence of the appointment code with the cell phone number and the bank card. Further, the mapping relationship of the appointment information preferably contains a correspondence of the appointment code with the cell phone number, the bank card and the appointed consumption credit.

Next, in payment step S102, when it is required to place the payment, the user enters the payment information containing at least the appointment code and the consumption information (i.e., the amount of consumption at each time) from the payment terminal 102. Of course, in order to further improve the safety of transaction, it can also require that in payment step S102 the transaction verification code of bank card password and the cell phone number be further entered in the payment terminal 102.

Then, in verification step S103, the bank card issuer backstage 101 verifies the payment information containing the appointment code and sent from the payment terminal 102 via the network access authority system 103 according to the mapping relationship of the appointment information so as to confirm the validity of transaction.

It can be seen that the four steps of open-up step S100, appointment step S101, payment step S102 and verification step S103 can be classified into three stages of "open-up stage", "appointment stage" and "payment stage" in total.
(1) in the open-up stage, i.e., the open-up step S100, the user (i.e. the card holder) submits a binding relationship between the cell phone number and the bank card number to the bank card issuer backstage 101 so as to establish a certain contractual relationship.
(2) in the appointment stage, i.e., the appointment step S101, the user accesses the bank card issuer backstage 101 via mobile terminals, and website, etc., the bank card issuer backstage 101 binds the appointment code entered by the user, alternatively, the user obtains the appointment code generated by the bank card issuer backstage 101. Herein, the appointment code will be replaced by the bank card number, and magnetic track information, etc., to be served as a verification warrant in payment stage.
(3) in the payment stage, i.e., the payment step S102 and the verification step S103, the user enters the appointment code and the transaction verification code at the payment terminal 102, which are sent to the bank card issuer backstage 101 via the network access authority system 103; after the appointment code and the transaction verification code are verified by the network access authority system 103, the payment is completed.

During the entire transaction cycle, the open-up stage is required to be experienced only once, and the appointment stage and the payment stage will be experienced many times. That is, at each time of consumption, only the appointment stage and the payment stage are required to be experienced.

The system and method for safety closed-loop payment of the invention are described above. According to the system and method for safety closed-loop payment of the invention, the following advantageous technical effects can be brought about:
(1) card free payment transactions of various bank cards can be supported, including debit card and credit card, etc.;
(2) payment transactions are completed via payment channels such as POS terminal, etc., thus making card free consumption more easily populated;
(3) due to the existence of the appointment code, the transactions are made safer, and no sensible information such as magnetic track of bank cards will appear during consumptions, and thus leakage of information related to bank cards during transaction can be avoided;
(4) due to the existence of the appointment code, the transactions are made more flexible and convenient. Therefore, users can directly place the payment for consumption without any payment media such as bank cards.

Some variations of the invention will be briefly described below.

### The First Variation

In the above first embodiment, the payment terminal 102 is a POS terminal, while in the first variation, the payment terminal 102 is a network terminal. Other configurations and steps are the same as those of the first embodiment.

When it is required to make consumption payment, the user enters the appointment code and the transaction verification code at the network terminal serving as the payment terminal 102. The network terminal packs the acquired appointment code and transaction verification code as well as the information on consumption amount on the network via a gateway and sends it to the network access authority system 103. Then, the network access authority system 103 forwards the packed information sent from the payment terminal 102 to the bank card issuer backstage 101. After this, subsequent processes are performed as that is done in the first embodiment.

In this way, payment can also be placed using the safety closed-loop payment system of the invention on a network terminal. Therefore, card free consumption can be made more easily populated. Besides, due to the existence of the appointment code, the transactions are made more flexible and convenient. Moreover, since only the appointment code is required to be entered during the payment and sensible information such as bank card number is not required to be entered, safety in payment can be ensured.

### The Second Variation

In the second variation, the payment terminal 102 is a communication device such as mobile phone or landline telephone. Other configurations and steps are the same as those in the first embodiment.

When it is required to place a consumption payment, the user enters the appointment code and the transaction verification code on a mobile phone or a landline telephone serving as the payment terminal 102. The mobile communication device sends the acquired appointment code and transaction verification code as well as information on consumption amount to the network access authority system 103 via a communication network. Then, the network access authority system 103 forwards the information sent from the payment terminal 102 to the bank card issuer backstage 101. After this, subsequent processes are performed as in the first embodiment.

In this way, payment can also be placed using the safety closed-loop payment system of the invention by means of a communication terminal such as landline telephone, cell phone or the like. Therefore, card free consumption can be made more easily populated. Besides, due to the existence of the appointment code, the transactions are made more flexible and convenient. Moreover, since only the appointment code is required to be entered during payment and sensible information such as bank card number is not required to be entered, safety in payment can be ensured.

### The Third Variation

In the first embodiment, the appointment code is generated at the bank card issuer backstage 101, whereas in the third embodiment, the appointment code is input to the bank card issuer backstage 101 by a user himself via such means as cell phone, and network etc. Then, the bank card issuer backstage 101 establishes a one-to-one mapping relationship between the appointment code and the appointment information such bank card number. Other configurations and steps are the same as those in the first embodiment.

In this way, the appointment code can be input from the user side and the user can set an appointment code which can be easily memorized according to his preference. Therefore, convenience in use of the safety closed-loop payment system of the invention can be further improved.

Some embodiments of the safety closed-loop payment system and method of the invention have been described above. Although only some embodiments of the invention have been described, those skilled in the art can understand that the invention can be implemented in various other forms within the spirit and scope of the invention. Therefore, the illustrated examples and embodiments are only schematic rather than limiting. The invention can cover various modifications and replacements without departing from the spirit and scope of the invention as defined by the appended individual claims.

## Claims

1. A safety closed-loop payment system, **characterized in that** comprising:
a user terminal (100) by means of which a user sends out appointment information;
a business card issuer backstage (101) which accepts the appointment information from the user terminal (100), generates a mapping relationship of the appointment information and returns it to the user terminal (100), wherein the mapping relationship of the appointment information at least contains a correspondence between an appointment code and a bank card;
a payment terminal (102) which obtains payment information input by the user and sends the payment information to a network access authority system (103), wherein the payment information at least contains the appointment code and consumption information; and
the network access authority system (103) which sends the payment information sent from the payment terminal to the bank card issuer backstage (101),
wherein the bank card issuer backstage (101) verifies the payment information sent from the network access authority system (103) according to the mapping relationship of the appointment information, and informs the user terminal (100) of completion of transaction in case of successful verification.

2. The safety closed-loop payment system according to claim 1, **characterized in that**
the appointment information contains bank card number and cell phone number, and
the mapping relationship of the appointment information contains a correspondence of the appointment code with the bank card number and the cell phone number.

3. The safety closed-loop payment system according to claim 2, **characterized in that**
the payment information further comprises transaction verification code, and
the transaction verification code includes cell phone number and bank card password.

4. The safety closed-loop payment system according to claim 3, **characterized in that**
the appointment code is generated by the bank card issuer backstage (101).

5. The safety closed-loop payment system according to claim 3, **characterized in that**
the appointment code is input by the user terminal (100) and stored at the bank card issuer backstage (101).

6. The safety closed-loop payment system according to claim 4, **characterized in that**
the appointment information contains the bank card number, the cell phone number and the appointed consumption credit, and
the mapping relationship of the appointment information contains a correspondence relationship of the appointment code with the bank card number, the cell phone number and the appointed consumption credit.

7. The safety closed-loop payment system according to claim 4, **characterized in that**
the consumption information contains the consumption amount incurred at each time.

8. The safety closed-loop payment system according to any of claims 1 to 7, **characterized in that**
the appointment code is valid within a prescribed time period.

9. The safety closed-loop payment system according to any of claims 1 to 7, **characterized in that**
the payment terminal is any one of POS terminal, network payment terminal, landline telephone, and mobile phone.

10. The safety closed-loop payment system according to claim 9, **characterized in that**
in the event that the payment terminal (102) is POS terminal, the POS terminal can input the appointment code.

11. A safety closed-loop payment method, **characterized in that** comprising:
an appointment step which accepts an appointment information from a user, generates a mapping relationship of the appointment information and returns it to the user, wherein the mapping relationship of the appointment information at least contains a correspondence of an appointment code to a bank card;
a payment step which obtains payment information from the user, wherein the payment information at least contains the appointment code and the consumption information; and
a verification step which verifies the payment information according to the appointment information so as to confirm the validity of transaction,
wherein in the verification step, the user is informed of the completion of transaction in case of successful verification.

12. The safety closed-loop payment method according to claim 11, **characterized in that**
an open-up step is further included before the appointment step, in which the user submits a binding relationship between the cell phone number and the bank card number to the bank card issuer.

13. The safety closed-loop payment method according to claim 11, **characterized in that**
the appointment information contains the bank card number and the cell phone number, and
the mapping relationship of the appointment information contains a correspondence relationship of the appointment code to the bank card number and the cell phone number.

14. The safety closed-loop payment method according to claim 13, **characterized in that**
the payment information further contains a transaction verification code, the transaction verification code includes the cell phone number and the bank card password.

15. The safety closed-loop payment method according to claim 14, **characterized in that**
the appointment code is generated by a bank card issuer backstage.

16. The safety closed-loop payment method according to claim 15, **characterized in that**
the appointment code is input by the user.

17. The safety closed-loop payment method according to claim 15, **characterized in that**
the appointment information contains the bank card number, the cell phone number and the appointed consumption credit, and
the mapping relationship of the appointment information contains a correspondence relationship of the appointment code to the bank card number, the cell phone number and the appointed consumption credit.

18. The safety closed-loop payment method according to claim 14, **characterized in that**
the consumption information contains consumption amount.

19. The safety closed-loop payment method according to any of claims 12 to 18, **characterized in that**
the appointment code is valid within a prescribed time period.
